(19)

Europäisches
Patentamt
European
Patent Office
Office européen
des brevets

(11) **EP 4 779 887 A1**

(12) **EUROPEAN PATENT APPLICATION**
published in accordance with Art. 153(4) EPC

(43) Date of publication:
**22.07.2026 Bulletin 2026/30**

(21) Application number: **23951776.6**

(22) Date of filing: **12.09.2023**

(51) International Patent Classification (IPC):
**H04B 7/06** *(2006.01)*

(52) Cooperative Patent Classification (CPC):
**H04B 7/06**

(86) International application number:
**PCT/CN2023/118389**

(87) International publication number:
**WO 2025/054835 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **ZHAO, Qun
Beijing 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **SENSING METHOD, SENSING TRANSMITTER, SENSING RECEIVER, SENSING SYSTEM, AND MEDIUM**

(57) The present disclosure relates to a sensing method, a sensing transmitter, a sensing receiver, a sensing system, and a medium. The sensing method comprises: a sensing transmitter determining patterns of a plurality of sensing reference signal ports; and sensing a multi-port sensing reference signal according to the patterns of the plurality of sensing reference signal ports. The embodiments of the present disclosure provide a multi-port sensing reference signal, which can support multi-beam scanning, so as to facilitate a reduction in the time required for wireless sensing.

FIG. 2

**Description**

TECHNICAL FIELD

This disclosure relates to the field of communication technology, and in particular, to sensing methods, a sensing transmitter, a sensing receiver, a sensing system, and a medium.

BACKGROUND

In wireless sensing, it is generally necessary to estimate a distance, azimuth angle, and velocity of a sensing target. To implement the wireless sensing, it is typically necessary to transmit a reference signal used for sensing.

SUMMARY

Embodiments of the disclosure provide sensing methods, a sensing transmitter, a sensing receiver, a sensing system, and a medium.
According to a first aspect of embodiments of the disclosure, a sensing method is provided. The sensing method is performed by a sensing transmitter. The method includes:

determining patterns of a plurality of sensing reference signal ports; and
transmitting multi-port sensing reference signals based on the patterns of the plurality of sensing reference signal ports.

According to a second aspect of embodiments of the disclosure, a sensing method is provided. The method is performed by a sensing receiver. The method includes:

receiving a parameter sent by a sensing transmitter;
determining patterns of a plurality of sensing reference signal ports based on the parameter;
receiving multi-port sensing reference signals based on the patterns of the plurality of sensing reference signal ports; and
performing measurement on the multi-port sensing reference signals.

According to a third aspect of embodiments of the disclosure, a sensing transmitter is provided. The sensing transmitter includes:

a processing module, configured to determine patterns of a plurality of sensing reference signal ports; and
a transceiver module, configured to transmit multi-port sensing reference signals based on the patterns of the plurality of sensing reference signal ports.

According to a fourth aspect of embodiments of the disclosure, a sensing receiver is provided. The sensing receiver includes:

a transceiver module, configured to receive a parameter sent by a sensing transmitter; and
a processing module, configured to determine patterns of a plurality of sensing reference signal ports based on the parameter;
the transceiver module is further configured to receive multi-port sensing reference signals based on the patterns of the plurality of sensing reference signal ports; and
the processing module is further configured to perform measurements on the multi-port sensing reference signals.

According to a fifth aspect of embodiments of the disclosure, a sensing transmitter is provided. The sensing transmitter includes one or more processors. The one or more processors are configured to perform the sensing method according to the first aspect of embodiments of the disclosure.
According to a sixth aspect of embodiments of the disclosure, a sensing receiver is provided. The sensing receiver includes one or more processors. The one or more processors are configured to perform the sensing method according to the second aspect of embodiments of the disclosure.
According to a seventh aspect of embodiments of the disclosure, a sensing system is provided. The sensing system includes a sensing transmitter configured to perform the sensing method according to the first aspect of embodiments of the disclosure, and a sensing receiver configured to perform the sensing method according to the second aspect of embodiments of the disclosure.

According to an eighth aspect of embodiments of the disclosure, a storage medium is provided. The storage medium has instructions stored thereon. When the instructions are executed on a communication device, the communication device is caused to perform the sensing method according to the first aspect of embodiments of the disclosure or to perform the sensing method according to the second aspect of embodiments of the disclosure.

Embodiments of the disclosure provide a technical solution of multi-port sensing reference signals, which may support multi-beam scanning.

## BRIEF DESCRIPTION OF THE DRAWINGS

To explain technical solutions according to embodiments of the disclosure more clearly, the following briefly introduces the drawings required for describing embodiments. The following drawings are merely some embodiments of the disclosure and do not impose specific limitations on the protection scope of the disclosure.

FIG. 1 is an example schematic diagram illustrating an architecture of a communication system according to an embodiment of the disclosure.

FIG. 2 is an example schematic diagram illustrating an interaction of a sensing method according to an embodiment of the disclosure.

FIG. 3A is an example schematic diagram illustrating patterns of two sensing reference signal ports according to an embodiment of the disclosure.

FIG. 3B is an example schematic diagram illustrating patterns of two sensing reference signal ports according to an embodiment of the disclosure.

FIG. 3C is an example schematic diagram illustrating patterns of two sensing reference signal ports according to an embodiment of the disclosure.

FIG. 4A is an example flowchart illustrating a sensing method according to an embodiment of the disclosure.

FIG. 4B is an example flowchart illustrating a sensing method according to an embodiment of the disclosure.

FIG. 5 is an example flowchart illustrating a sensing method according to an embodiment of the disclosure.

FIG. 6A is an example schematic diagram illustrating a structure of a sensing transmitter according to an embodiment of the disclosure.

FIG. 6B is an example schematic diagram illustrating a structure of a sensing receiver according to an embodiment of the disclosure.

FIG. 7A is an example schematic diagram illustrating a structure of a communication device according to an embodiment of the disclosure.

FIG. 7B is an example schematic diagram illustrating a structure of a chip according to an embodiment of the disclosure.

## DETAILED DESCRIPTION

Embodiments of the disclosure provide sensing methods, a sensing transmitter, a sensing receiver, a sensing system, and a medium.

In a first aspect, an embodiment of the disclosure provides a sensing method, performed by a sensing transmitter. The method includes:

determining patterns of multiple sensing reference signal ports; and

transmitting multi-port sensing reference signals based on the patterns of the multiple sensing reference signal ports.

In the above embodiment, the sensing transmitter transmits the multi-port sensing reference signals based on the patterns of the multiple sensing reference signal ports, extending from single-port sensing reference signal to the multi-port sensing reference signals, thereby supporting multi-beam scanning, which is beneficial for reducing the time required for wireless sensing.

In combination with some embodiments of the first aspect, in some embodiments, a frequency-domain pattern of each sensing reference signal port satisfies one of:

$$S=\left\{q \cdot P \cdot K_{min} + N_{subc}^{PRB} \cdot K_0 + k_0 + m \mid q = 0,1,\cdots,Q-1\right\} \cup \left\{p \cdot Q \cdot K_{min} + N_{subc}^{PRB} \cdot K_0 + k_0 + m \mid p = 0,1,\cdots,2P-1\right\};$$

$$S=\left\{q\cdot P\cdot K_{min}+N_{subc}{}^{PRB}\cdot K_0+k_0+m\,|\,q=0,1,\cdots,Q-1\right\}\bigcup\left\{p\cdot Q\cdot K_{min}+N_{subc}{}^{PRB}\cdot K_0+k_0+m\,|\,p=1,\cdots,2P-1\right\};$$

or

$$S=\left\{q\cdot P\cdot K_{min}+N_{subc}{}^{PRB}\cdot K_0+k_0+m\,|\,q=1,\cdots,Q-1\right\}\bigcup\left\{p\cdot Q\cdot K_{min}+N_{subc}{}^{PRB}\cdot K_0+k_0+m\,|\,p=0,1,\cdots,2P-1\right\};$$

where S represents a set of subcarrier positions occupied by the frequency-domain pattern of each sensing reference signal port;

P and Q are a pair of coprime integers, and P is less than Q;

$K_{min}$ represents a minimum frequency-domain interval between subcarriers where sensing reference signals, adjacent in a frequency domain, of each sensing reference signal port are located;

$N_{subc}{}^{PRB}$ represents the number of subcarriers included in one physical resource block (PRB);

$K_0$ represents an index of a starting PRB of each sensing reference signal port relative to common resource block 0 (CRB0);

$k_0$ represents an index of a starting subcarrier of each sensing reference signal port within a PRB where the starting subcarrier is located; and

m represents a port index of each sensing reference signal port, and m is a non-negative integer less than $K_{min}$.

In the above embodiment, the coprime integer-based multi-port sensing reference signals may achieve a higher uniform degree of freedom (uDoF) and higher resolution in the Khatri-Rao subspace.

In combination with some embodiments of the first aspect, in some embodiments, the method further includes:

sending a first parameter to a sensing receiver, where the first parameter is used for determining the frequency-domain pattern of each sensing reference signal port;

the first parameter includes at least one of:

the number of ports M;
a set of port indexes;
P and the Q;
$K_{min}$;
$K_0$; or
$k_0$.

In the above embodiment, the sensing transmitter may notify the sensing receiver of at least one of above parameters, facilitating the sensing receiver to determine the frequency-domain pattern of each sensing reference signal port accordingly and receive and measure the multi-port sensing reference signals.

In combination with some embodiments of the first aspect, in some embodiments, the frequency-domain pattern of each sensing reference signal port satisfies one of:

$$S=\left\{n\cdot K_{min}+N_{subc}{}^{PRB}\cdot K_0+k_0+m\,|\,n=0,\cdots,\left\lfloor\frac{N}{2}\right\rfloor\right\}\bigcup\left\{\left(n\cdot\left\lfloor\frac{N}{2}\right\rfloor+n-1\right)\cdot K_{min}+N_{subc}{}^{PRB}\cdot K_0+k_0+m\,|\,n=1,\cdots,\left\lceil\frac{N}{2}\right\rceil\right\};$$

$$S=\left\{n\cdot K_{min}+N_{subc}{}^{PRB}\cdot K_0+k_0+m\,|\,n=0,\cdots,\left\lfloor\frac{N}{2}\right\rfloor-1\right\}\bigcup\left\{\left(n\cdot\left\lfloor\frac{N}{2}\right\rfloor+n-1\right)\cdot K_{min}+N_{subc}{}^{PRB}\cdot K_0+k_0+m\,|\,n=1,\cdots,\left\lceil\frac{N}{2}\right\rceil\right\};$$

or

$$S=\left\{n\cdot K_{min}+N_{subc}{}^{PRB}\cdot K_0+k_0+m\,|\,n=0,\cdots,\left\lfloor\frac{N}{2}\right\rfloor\right\}\bigcup\left\{\left[(n+1)\cdot\left\lfloor\frac{N}{2}\right\rfloor+n\right]\cdot K_{min}+N_{subc}{}^{PRB}\cdot K_0+k_0+m\,|\,n=1,\cdots,\left\lceil\frac{N}{2}\right\rceil-1\right\};$$

where S represents a set of subcarrier positions occupied by the frequency-domain pattern of each sensing reference signal port;

N represents the number of subcarriers occupied by the frequency-domain pattern of each sensing reference signal port;

$K_{min}$ represents a minimum frequency-domain interval between subcarriers where sensing reference signals, adjacent in a frequency domain, of each sensing reference signal port are located;

$N_{subc}^{PRB}$ represents the number of subcarriers included in one PRB;

$K_0$ represents an index of a starting PRB of each sensing reference signal port relative to CRB0;

$k_0$ represents an index of a starting subcarrier of each sensing reference signal port within a PRB where the starting subcarrier is located; and

m represents a port index of each sensing reference signal port, and m is a non-negative integer less than $K_{min}$.

In the above embodiment, the nested multi-port sensing reference signals may achieve a higher uniform degree of freedom (uDoF) and higher resolution in the Khatri-Rao subspace.

In combination with some embodiments of the first aspect, in some embodiments, the method further includes:

sending a first parameter to a sensing receiver, where the first parameter is used for determining the frequency-domain pattern of each sensing reference signal port;

the first parameter includes at least one of:

the number of ports M;
a set of port indexes;
N;
$K_{min}$;
$K_0$; or
$k_0$.

In the above embodiment, the sensing transmitter may notify the sensing receiver of at least one of above parameters, facilitating the sensing receiver to determine the frequency-domain pattern of each sensing reference signal port accordingly and receive and measure the multi-port sensing reference signals.

In combination with some embodiments of the first aspect, in some embodiments, the frequency-domain pattern of each sensing reference signal port satisfies:

$$S = \left\{ n \cdot K_1 + N_{subc}^{PRB} \cdot K_0 + k_0 + m \mid n = 0, \cdots, N-1 \right\};$$

where S represents a set of subcarrier positions occupied by the frequency-domain pattern of each sensing reference signal port;

N represents the number of subcarriers occupied by the frequency-domain pattern of each sensing reference signal port;

$K_1$ represents a frequency-domain interval between subcarriers where sensing reference signals, adjacent in a frequency domain, of each sensing reference signal port are located;

$N_{subc}^{PRB}$ represents the number of subcarriers included in one PRB;

$K_0$ represents an index of a starting PRB of each sensing reference signal port relative to CRB0;

$k_0$ represents an index of a starting subcarrier of each sensing reference signal port within a PRB where the starting subcarrier is located; and

m represents a port index of each sensing reference signal port, and m is a non-negative integer less than $K_{min}$.

In the above embodiment, the frequency domain pattern of each sensing reference signal port adopts a uniform comb pattern, which is beneficial for quickly determining the frequency domain pattern of each sensing reference signal port.

In combination with some embodiments of the first aspect, in some embodiments, the method further includes:

sending a first parameter to a sensing receiver, where the first parameter is used for determining the frequency domain pattern of each sensing reference signal port;

the first parameter includes at least one of:

the number of ports M;
a set of port indexes;

the N;

$K_1$;

$K_0$; or

$k_0$.

In the above embodiment, the sensing transmitter may notify the sensing receiver of at least one of above parameters, facilitating the sensing receiver to determine the frequency-domain pattern of each sensing reference signal port accordingly and receive and measure the multi-port sensing reference signals.

In combination with some embodiments of the first aspect, in some embodiments, the method further includes: sending a second parameter to a sensing receiver, where the second parameter is used for determining a time-domain pattern of each sensing reference signal port.

In combination with some embodiments of the first aspect, in some embodiments, the second parameter includes at least one of:

an index of a starting slot of each sensing reference signal port;

a time-domain period of each sensing reference signal port;

the number of slots occupied by each sensing reference signal port;

a set of Orthogonal Frequency Division Multiplexing (OFDM) symbols within a slot for each sensing reference signal port;

an index of a starting OFDM symbol of each sensing reference signal port within a slot where the starting OFDM symbol is located;

the total number of OFDM symbols occupied by each sensing reference signal port; or

a symbol interval for each sensing reference signal port.

In the above embodiment, the sensing transmitter may notify the sensing receiver of at least one of above parameters, facilitating the sensing receiver to determine the time-domain pattern of each sensing reference signal port accordingly and receive and measure the multi-port sensing reference signals.

In combination with some embodiments of the first aspect, in some embodiments, the method further includes:

receiving the multi-port sensing reference signals; and

performing measurements on the multi-port sensing reference signals.

In the above embodiment, in monostatic mode, the sensing transmitter may receive and measure the multi-port sensing reference signals, thereby completing wireless sensing.

In a second aspect, an embodiment of the disclosure provides a sensing method performed by a sensing receiver. The method includes:

receiving a parameter sent by a sensing transmitter;

determining patterns of a plurality of sensing reference signal ports based on the parameter;

receiving multi-port sensing reference signals based on the patterns of the plurality of sensing reference signal ports; and

performing measurements on the multi-port sensing reference signals.

In the above embodiment, the sensing receiver may receive the parameter sent by the sensing transmitter, determine the patterns of the plurality of sensing reference signal ports based on the parameter sent by the sensing transmitter, and receive and measure the multi-port sensing reference signals based on the patterns of the plurality of sensing reference signal ports, thereby completing wireless sensing. Moreover, the multi-port sensing reference signals may support multi-beam scanning, which is beneficial for reducing the time required for wireless sensing.

In combination with some embodiments of the second aspect, in some embodiments, a frequency-domain pattern of each sensing reference signal port satisfies one of:

$$S=\left\{q\cdot P\cdot K_{min}+N_{subc}^{PRB}\cdot K_0+k_0+m\mid q=0,1,\cdots,Q-1\right\}\bigcup\left\{p\cdot Q\cdot K_{min}+N_{subc}^{PRB}\cdot K_0+k_0+m\mid p=0,1,\cdots,2P-1\right\};$$

$$S=\left\{q\cdot P\cdot K_{min}+N_{subc}^{PRB}\cdot K_0+k_0+m\mid q=0,1,\cdots,Q-1\right\}\bigcup\left\{p\cdot Q\cdot K_{min}+N_{subc}^{PRB}\cdot K_0+k_0+m\mid p=1,\cdots,2P-1\right\};$$

or

$$S=\left\{q\cdot P\cdot K_{min}+N_{subc}^{PRB}\cdot K_0+k_0+m\,|\,q=1,\cdots,Q-1\right\}\bigcup\left\{p\cdot Q\cdot K_{min}+N_{subc}^{PRB}\cdot K_0+k_0+m\,|\,p=0,1,\cdots,2P-1\right\};$$

where S represents a set of subcarrier positions occupied by the frequency-domain pattern of each sensing reference signal port;

P and Q are a pair of coprime integers, and P is less than Q;

$K_{min}$ represents a minimum frequency domain interval between subcarriers where sensing reference signals, adjacent in a frequency domain, of each sensing reference signal port are located;

$N_{subc}^{PRB}$ represents the number of subcarriers included in one PRB;

$K_0$ represents an index of a starting PRB of each sensing reference signal port relative to CRB0;

$k_0$ represents an index of a starting subcarrier of each sensing reference signal port within a PRB where the starting subcarrier is located; and

m represents a port index of each sensing reference signal port, and m is a non-negative integer less than $K_{min}$.

In combination with some embodiments of the second aspect, in some embodiments, receiving the parameter sent by the sensing transmitter includes:

receiving a first parameter sent by the sensing transmitter, where the first parameter is used for determining the frequency-domain pattern of each sensing reference signal port;

the first parameter includes at least one of:

the number of ports M;
a set of port indexes;
P and the Q;
$K_{min}$;
$K_0$; or
$k_0$.

In combination with some embodiments of the second aspect, in some embodiments, the frequency-domain pattern of each sensing reference signal port satisfies one of:

$$S=\left\{n\cdot K_{min}+N_{subc}^{PRB}\cdot K_0+k_0+m\,|\,n=0,\cdots,\left\lfloor\frac{N}{2}\right\rfloor\right\}\bigcup\left\{\left(n\cdot\left\lfloor\frac{N}{2}\right\rfloor+n-1\right)\cdot K_{min}+N_{subc}^{PRB}\cdot K_0+k_0+m\,|\,n=1,\cdots,\left\lceil\frac{N}{2}\right\rceil\right\};$$

$$S=\left\{n\cdot K_{min}+N_{subc}^{PRB}\cdot K_0+k_0+m\,|\,n=0,\cdots,\left\lfloor\frac{N}{2}\right\rfloor-1\right\}\bigcup\left\{\left(n\cdot\left\lfloor\frac{N}{2}\right\rfloor+n-1\right)\cdot K_{min}+N_{subc}^{PRB}\cdot K_0+k_0+m\,|\,n=1,\cdots,\left\lceil\frac{N}{2}\right\rceil\right\};$$

or

$$S=\left\{n\cdot K_{min}+N_{subc}^{PRB}\cdot K_0+k_0+m\,|\,n=0,\cdots,\left\lfloor\frac{N}{2}\right\rfloor\right\}\bigcup\left\{\left[(n+1)\cdot\left\lfloor\frac{N}{2}\right\rfloor+n\right]\cdot K_{min}+N_{subc}^{PRB}\cdot K_0+k_0+m\,|\,n=1,\cdots,\left\lceil\frac{N}{2}\right\rceil-1\right\};$$

where S represents a set of subcarrier positions occupied by the frequency-domain pattern of each sensing reference signal port;

N represents the number of subcarriers occupied by the frequency-domain pattern of each sensing reference signal port;

$K_{min}$ represents a minimum frequency domain interval between subcarriers where sensing reference signals, adjacent in a frequency domain, of each sensing reference signal port are located;

$N_{subc}^{PRB}$ represents the number of subcarriers included in one PRB;

$K_0$ represents an index of a starting PRB of each sensing reference signal port relative to CRB0;

$k_0$ represents an index of a starting subcarrier of each sensing reference signal port within a PRB where the starting subcarrier is located; and

m represents a port index of each sensing reference signal port, and m is a non-negative integer less than $K_{min}$.

In combination with some embodiments of the second aspect, in some embodiments, receiving the parameter sent by the sensing transmitter includes:

receiving a first parameter sent by the sensing transmitter, where the first parameter is used for determining the frequency-domain pattern of each sensing reference signal port;
the first parameter includes at least one of:

the number of ports M;
a set of port indexes;
the N;
$K_{min}$;
$K_0$; or
$k_0$.

In combination with some embodiments of the second aspect, in some embodiments, the frequency-domain pattern of each sensing reference signal port satisfies:

$$S = \left\{ n \cdot K_1 + N_{subc}^{PRB} \cdot K_0 + k_0 + m \,|\, n = 0, \cdots, N-1 \right\};$$

where S represents a set of subcarrier positions occupied by the frequency-domain pattern of each sensing reference signal port;
N represents the number of subcarriers occupied by the frequency-domain pattern of each sensing reference signal port;
$K_1$ represents a frequency-domain interval between subcarriers where sensing reference signals, adjacent in a frequency domain, of each sensing reference signal port are located;
$N_{subc}^{PRB}$ represents the number of subcarriers included in one PRB;
$K_0$ represents an index of a starting PRB of each sensing reference signal port relative to CRB0;
$k_0$ represents an index of a starting subcarrier of each sensing reference signal port within a PRB where the starting subcarrier is located; and
m represents a port index of each sensing reference signal port, and m is a non-negative integer less than $K_{min}$.

In combination with some embodiments of the second aspect, in some embodiments, receiving the parameter sent by the sensing transmitter includes:

receiving a first parameter sent by the sensing transmitter, where the first parameter is used for determining the frequency-domain pattern of each sensing reference signal port;
the first parameter includes at least one of:

the number of ports M;
a set of port indexes;
the N;
$K_1$;
$K_0$; or
$k_0$.

In combination with some embodiments of the second aspect, in some embodiments, receiving the parameter sent by the sensing transmitter includes:
receiving a second parameter sent by the sensing transmitter, where the second parameter is used for determining a time-domain pattern of each sensing reference signal port.
In combination with some embodiments of the second aspect, in some embodiments, the second parameter includes at least one of:

an index of a starting slot of each sensing reference signal port;
a time-domain period of each sensing reference signal port;

the number of slots occupied by each sensing reference signal port;

a set of OFDM symbols within a slot for each sensing reference signal port;

an index of a starting OFDM symbol of each sensing reference signal port within a slot where the starting OFDM symbol is located;

the total number of OFDM symbols occupied by each sensing reference signal port; or

a symbol interval for each sensing reference signal ports.

In a third aspect, an embodiment of the disclosure provides a sensing transmitter. The sensing transmitter includes:

a processing module, configured to determine patterns of a plurality of sensing reference signal ports; and

a transceiver module, configured to transmit multi-port sensing reference signals based on the patterns of the plurality of sensing reference signal ports.

In a fourth aspect, an embodiment of the disclosure provides a sensing receiver. The sensing receiver includes:

a transceiver module, configured to receive a parameter sent by a sensing transmitter; and

a processing module, configured to determine patterns of a plurality of sensing reference signal ports based on the parameter;

where the transceiver module is further configured to receive multi-port sensing reference signals based on the patterns of the plurality of sensing reference signal ports;

the processing module is further configured to perform measurements on the multi-port sensing reference signals.

In a fifth aspect, an embodiment of the disclosure provides a sensing transmitter. The sensing transmitter includes one or more processors. The one or more processors are configured to perform the method according to the first aspect of embodiments of the disclosure or implementations of the first aspect.

In a sixth aspect, an embodiment of the disclosure provides a sensing receiver. The sensing receiver includes one or more processors. The one or more processors are configured to perform the method according to the second aspect of embodiments of the disclosure or implementations of the second aspect.

In a seventh aspect, an embodiment of the disclosure provides a sensing system. The sensing system includes a sensing transmitter configured to perform the method according to the first aspect of embodiments of the disclosure or implementations of the first aspect; and a sensing receiver configured to perform the method according to the second aspect of embodiments of the disclosure or implementations of the second aspect.

In an eighth aspect, an embodiment of the disclosure provides a storage medium. The storage medium has instructions stored thereon. When the instructions are executed on a communication device, the communication device is caused to perform the method according to the first aspect of embodiments of the disclosure or implementations of the first aspect, or the method according to the second aspect of embodiments of the disclosure or implementations of the second aspect.

In a ninth aspect, an embodiment of the disclosure provides a program product. When the program product is executed by a communication device, the communication device is caused to perform the method according to the first aspect of embodiments of the disclosure or implementations of the first aspect, or the method according to the second aspect of embodiments of the disclosure or implementations of the second aspect.

In a tenth aspect, an embodiment of the disclosure provides a computer program. When the computer program runs on a computer, the computer is caused to perform the method according to the first aspect of embodiments of the disclosure or implementations of the first aspect, or the method according to the second aspect of embodiments of the disclosure or implementations of the second aspect.

In an eleventh aspect, an embodiment of the disclosure provides a chip or a chip system. The chip or chip system includes a processing circuit configured to perform the method according to the first aspect of embodiments of the disclosure or implementations of the first aspect, or the method according to the second aspect of embodiments of the disclosure or implementations of the second aspect.

It may be understood that the above sensing transmitter, sensing receiver, sensing system, storage medium, program product, computer program, chip or chip system are all used to perform the methods according to embodiments of the disclosure. Therefore, for the beneficial effects they may achieve, reference may be made to the beneficial effects in the corresponding methods, which are not repeated here.

Embodiments of the disclosure provide sensing methods, a sensing transmitter, a sensing receiver, a sensing system, and a medium. In some embodiments, terms "sensing transmitter", "terminal", "network device", "first device", "sensing transmitting end", and "wireless transmitting end" may be used interchangeably. Terms "sensing receiver", "terminal", "network device", "second device", "sensing receiving end", and "wireless receiving end" may be used interchangeably.

Embodiments of the disclosure are not exhaustive and are merely illustrative of some embodiments, and do not limit the protection scope of the disclosure. In the absence of conflict, each step in a certain embodiment may be implemented as an independent embodiment, and the steps may be combined arbitrarily. For example, a solution after removing some steps in a certain embodiment may also be implemented as an independent embodiment, and the order of the steps in a certain embodiment may be exchanged arbitrarily. In addition, optional implementations in a certain embodiment may be combined arbitrarily. Furthermore, various embodiments may be combined arbitrarily. For example, part or all of the steps of different embodiments may be combined arbitrarily, and one embodiment may be combined arbitrarily with optional implementations of other embodiments.

In each embodiment of the disclosure, unless otherwise specified and logically conflicting, terms and/or descriptions between embodiments are consistent and may be referenced mutually, and technical features in different embodiments may be combined to form new embodiments according to their inherent logical relationships.

The terms used in embodiments of the disclosure are only for the purpose of describing specific embodiments and are not intended as limitations on the disclosure.

In embodiments of the disclosure, unless otherwise specified, elements expressed in the singular form, such as "a", "an", "the", "said", "above", "aforementioned", "this", etc., may mean "one and only one" or may mean "one or more", "at least one", etc. For example, when using articles such as "a", "an", "the" in English in translation, the noun after the article may be understood as singular expression or plural expression.

In embodiments of the disclosure, the term "multiple" means "two or more".

In some embodiments, terms such as "at least one of", "one or more", and "a plurality of" may be interchanged.

In some embodiments, expressions such as "at least one of A and B", "A and/or B", "in one case, A; and in another case, B", "in response to one case, A; and in response to another case, B" may include the following technical solutions depending on the situation: in some embodiments, A (performing A independently of B); in some embodiments, B (performing B independently of A); in some embodiments selectively performing A or B (selectively performing A or B); in some embodiments, A and B (performing both A and B). The same applies when there are more branches such as A, B, C.

In some embodiments, expressions such as "A or B" may include the following technical solutions depending on the situation: in some embodiments, A (performing A independently of B); in some embodiments, B (performing B independently of A); in some embodiments, selectively performing A or B (selecting one from A and B to perform). The same applies when there are more branches such as A, B, C.

Prefix words such as "first" and "second" in embodiments of the disclosure are only used to distinguish different objects described and do not constitute limitations on the position, order, priority, quantity, or content of the objects described. For the objects described, reference may be made to the claims or the context description in embodiments, and no additional restrictions should be imposed due to the use of prefix words. For example, if an object described is "field", then the ordinal numbers before "field" in "first field" and "second field" do not limit the position or order between the "fields", and "first" and "second" do not limit whether the "fields" they define are in the same message, nor do they limit the order of the "first field" and the "second field". As another example, if the object described is "level", then the ordinal numbers before "level" in "first level" and "second level" do not limit the priority between "levels". As another example, the quantity of objects described is not limited by the ordinal numbers, and may be one or more. Taking "first device" as an example, the number of "devices" may be one or more. Furthermore, objects defined by different prefix words may be the same or different. For example, if the object described is "device", then the "first device" and the "second device" may be the same device or different devices, and their types may be the same or different. As another example, if the object described is "information", then the "first information" and the "second information" may be the same information or different information, and their content may be the same or different.

In some embodiments, "including A", "containing A", "used for indicating A", "carrying A" may be interpreted as directly carrying A or indirectly indicating A.

In some embodiments, terms such as "in response to...", "in response to determining...", "in the case of...", "at the time of...", "when...", "if...", "in a case where ..." may be interchanged.

In some embodiments, terms such as "greater than", "greater than or equal to", "not smaller than", "more than", "more than or equal to", "not less than", "higher than", "higher than or equal to", "not lower than", and "above" may be interchanged. Terms such as "smaller than", "smaller than or equal to", "not greater than", "less than", "less than or equal to", "not more than", "lower than", "lower than or equal to", "not higher than", and "below" may be interchanged.

In some embodiments, devices and apparatuses may be interpreted as physical or virtual, and their names are not limited to those recorded in embodiments, and in some cases they may also be understood as "equipment", "device", "circuit", "network element", "node", "function", "unit", "section", "system", "network", "chip", "chip system", "entity", "subject", etc.

In some embodiments, "network" may be interpreted as a device included in the network, such as, access network equipment, core network equipment, etc.

In some embodiments, "access network device (AN device)" may also be referred to as "radio access network device (RAN device)", "base station (BS)", "radio base station", "fixed station", and in some embodiments may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc.

In some embodiments, "terminal" or "terminal device" may be referred to as "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", or "client".

In some embodiments, obtaining data, information, etc. may comply with the laws and regulations of the country where it is located.

In some embodiments, data, information, etc. may be obtained after obtaining user consent.

Furthermore, each element, each row, or each column in tables of embodiments of the disclosure may be implemented as an independent embodiment, and any combination of any elements, any rows, or any columns may also be implemented as an independent embodiment.

Wireless communication and wireless sensing have a high degree of similarity. Integrated Sensing And Communication (ISAC) may combine wireless communication and wireless sensing, introducing close cooperation between the two, so that both wireless communication and wireless sensing may benefit, improving the effectiveness and reliability of wireless communication and also improving the accuracy of wireless sensing. Moreover, devices that support both wireless communication and wireless sensing may reduce network deployment costs.

In wireless sensing, it is generally necessary to estimate distance, azimuth angle (such as horizontal azimuth and vertical azimuth), and speed of a sensing target. Broadly speaking, sensing also includes wireless tracking and radio frequency identification of the sensing target. To achieve high-precision sensing, a sensing transmitter generally sends a dedicated reference signal for sensing. For ease of description, the dedicated reference signal for sensing is referred to as a sensing reference signal hereinafter. For example, the sensing reference signal may not carry information or data for communication.

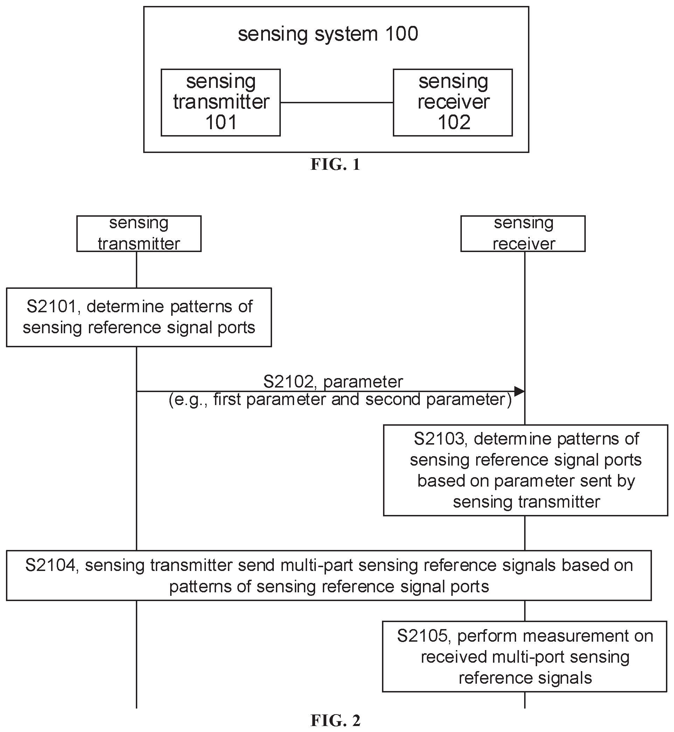

FIG. 1 is a schematic diagram illustrating a sensing system according to an embodiment of the disclosure. As illustrated in FIG. 1, the sensing system 100 may include a sensing transmitter 101 and a sensing receiver 102.

In some embodiments, in monostatic mode, the sensing transmitter 101 may transmit a sensing reference signal and measure the echo of the sensing reference signal to estimate at least one of the distance, angle, and speed of the sensing target.

In some embodiments, in bistatic mode, the sensing transmitter 101 may transmit a sensing reference signal. The sensing receiver 102 receives the sensing reference signal and measures the sensing reference signal to estimate at least one of the distance, angle, and speed of the sensing target.

It should be noted that the number of sensing transmitters and the number of sensing receivers illustrated in FIG. 1 are only examples and do not constitute a limitation on the embodiments of the disclosure. In actual situations, there may be one or more sensing transmitters and one or more sensing receivers.

It may be understood that the sensing system in embodiments of the disclosure may correspond to various sensing scenarios, such as sensing between terminals, sensing between a terminal and a network device, sensing between network devices, and so on.

In some embodiments, the sensing transmitter may be located in a terminal or a network device.

In some embodiments, the sensing receiver may be located in a terminal or a network device.

In an example, the sensing transmitter and the sensing receiver may be located in a network device.

In an example, the sensing transmitter may be located in a network device, and the sensing receiver may be located in a terminal.

In an example, the sensing transmitter may be located in a terminal, and the sensing receiver may be located in a network device.

In an example, the sensing transmitter and the sensing receiver may be located in a terminal.

In some embodiments, the terminal may is selected from a group including, but not limited to, at least one of a mobile phone, a wearable device, an Internet of Things device, a vehicle with communication functions, a smart vehicle, a tablet (Pad), a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home,.

In some embodiments, the network device is, for example, an access network device. The access network device may be selected from a group including, but not limited to, at least one of an evolved NodeB (eNB) in a fifth generation (5G) communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a sixth generation (6G) communication system, an Open RAN, a Cloud RAN, a base station in other communication systems, or an access node in a Wireless Fidelity (Wi-Fi) system.

Based on the sensing system illustrated in FIG. 1, taking estimating the distance of a sensing target as an example, the sensing receiver needs to accurately estimate an arrival time of a first echo path reflected by the sensing target (for the monostatic mode), or an arrival time of a first path scattered by the sensing target (for the bistatic mode). It should be understood that wireless sensing is sensitive to interference, and to ensure the accuracy of wireless sensing, the interference experienced by the sensing receiver when measuring the sensing reference signal should be minimized as much as possible.

In high frequency bands such as millimeter wave (mmWave), sub-tera Hertz (subThz), and tera Hertz (THz), propagation loss is severe. In this case, beamforming is used to complete sensing. Otherwise, severe high-frequency transmission loss may reduce the accuracy and performance of sensing.

When the beamforming is used, high-precision sensing is limited to sensing targets within a beam coverage or within a beam vicinity. For targets outside the beam coverage or far away from the beam vicinity, the sensing accuracy is low and sensing performance cannot be guaranteed. Therefore, the sensing transmitter needs to perform beam sweeping to complete sensing of surrounding targets. To quickly complete sensing of surrounding targets, the sensing transmitter may simultaneously transmit multiple beams pointing in different directions for parallel beam scanning.

The sensing transmitter needs to transmit the sensing reference signal based on a pattern of the sensing reference signal. The pattern of the sensing reference signal may be determined based on a time-domain pattern and a frequency-domain pattern. In some embodiments, the frequency-domain pattern of the sensing reference signal may be determined by, but is not limited to, one of the following implementations.

(1) Coprime Integers-Based Sensing Reference Signal

In some embodiments, the frequency-domain pattern of the sensing reference signal may be expressed as one of:

$$S = \left\{ q \cdot P \cdot K_{min} + N_{subc}^{PRB} \cdot K_0 + k_0 \mid q = 0,1,\cdots,Q-1 \right\} \cup \left\{ p \cdot Q \cdot K_{min} + N_{subc}^{PRB} \cdot K_0 + k_0 \mid p = 0,1,\cdots,2P-1 \right\};$$

$$S = \left\{ q \cdot P \cdot K_{min} + N_{subc}^{PRB} \cdot K_0 + k_0 \mid q = 0,1,\cdots,Q-1 \right\} \cup \left\{ p \cdot Q \cdot K_{min} + N_{subc}^{PRB} \cdot K_0 + k_0 \mid p = 1,\cdots,2P-1 \right\};$$

or

$$S = \left\{ q \cdot P \cdot K_{min} + N_{subc}^{PRB} \cdot K_0 + k_0 \mid q = 1,\cdots,Q-1 \right\} \cup \left\{ p \cdot Q \cdot K_{min} + N_{subc}^{PRB} \cdot K_0 + k_0 \mid p = 0,1,\cdots,2P-1 \right\};$$

where S represents a set of subcarrier positions occupied by the frequency-domain pattern of the sensing reference signal;

P and Q are a pair of coprime integers, and P is less than Q;

$K_{min}$ represents a minimum frequency-domain interval between subcarriers where sensing reference signals adjacent in a frequency domain are located;

$N_{subc}^{PRB}$ represents the number of subcarriers included in one physical resource block (PRB);

$K_0$ represents an index of a starting PRB of the sensing reference signal relative to common resource block 0 (CRB0), or in other words, $K_0$ represents a frequency-domain offset of the starting PRB of the sensing reference signal relative to CRBO, expressed as the number of PRBs;

$k_0$ represents an index of a starting subcarrier of the sensing reference signal within a PRB where the starting subcarrier is located.

In the above implementation, the sensing reference signal may achieve a higher uniform degree of freedom (uDoF) and higher resolution in the Khatri-Rao subspace.

(2) Nested Sensing Reference Signal

In some embodiments, the frequency-domain pattern of the sensing reference signal may be expressed as one of:

$$S = \left\{ n \cdot K_{min} + N_{subc}^{PRB} \cdot K_0 + k_0 \mid n = 0, \cdots, \left\lfloor \frac{N}{2} \right\rfloor \right\} \cup \left\{ \left( n \cdot \left\lfloor \frac{N}{2} \right\rfloor + n - 1 \right) \cdot K_{min} + N_{subc}^{PRB} \cdot K_0 + k_0 \mid n = 1, \cdots, \left\lceil \frac{N}{2} \right\rceil \right\};$$

$$S = \left\{ n \cdot K_{min} + N_{subc}^{PRB} \cdot K_0 + k_0 \mid n = 0, \cdots, \left\lfloor \frac{N}{2} \right\rfloor - 1 \right\} \cup \left\{ \left( n \cdot \left\lfloor \frac{N}{2} \right\rfloor + n - 1 \right) \cdot K_{min} + N_{subc}^{PRB} \cdot K_0 + k_0 \mid n = 1, \cdots, \left\lceil \frac{N}{2} \right\rceil \right\};$$

or

$$S = \left\{ n \cdot K_{min} + N_{subc}^{PRB} \cdot K_0 + k_0 \mid n = 0, \cdots, \left\lfloor \frac{N}{2} \right\rfloor \right\} \cup \left\{ \left[ (n+1) \cdot \left\lfloor \frac{N}{2} \right\rfloor + n \right] \cdot K_{min} + N_{subc}^{PRB} \cdot K_0 + k_0 \mid n = 1, \cdots, \left\lceil \frac{N}{2} \right\rceil - 1 \right\};$$

where S represents a set of subcarrier positions occupied by the frequency-domain pattern of the sensing reference signal;

N represents the number of subcarriers occupied by the frequency-domain pattern of the sensing reference signal;

$K_{min}$ represents a minimum frequency-domain interval between subcarriers where sensing reference signals adjacent in a frequency domain are located;

$N_{subc}^{PRB}$ represents the number of subcarriers included in one PRB;

$K_0$ represents an index of a starting PRB of the sensing reference signal relative to CRBO, or in other words, $K_0$ represents a frequency-domain offset of the starting PRB of the sensing reference signal relative to CRBO, expressed as the number of PRBs;

$k_0$ represents an index of a starting subcarrier of the sensing reference signal within a PRB where the starting subcarrier is located.

⌊ ⌋ represents a floor operation, and ⌈ ⌉ represents a ceil operation.

In the above implementation, the sensing reference signal may achieve a higher uniform degree of freedom (uDoF) and higher resolution in the Khatri-Rao subspace.

(3) Uniform Sensing Reference Signal

In some embodiments, the frequency-domain pattern of the sensing reference signal may be expressed as:

$$S = \left\{ n \cdot K_1 + N_{subc}^{PRB} \cdot K_0 + k_0 \mid n = 0, \cdots, N-1 \right\};$$

where S represents a set of subcarrier positions occupied by the frequency-domain pattern of the sensing reference signal;

N represents the number of subcarriers occupied by the frequency-domain pattern of the sensing reference signal;

$K_1$ represents a frequency-domain interval between subcarriers where sensing reference signals adjacent in a frequency domain are located;

$N_{subc}^{PRB}$ represents the number of subcarriers included in one PRB;

$K_0$ represents an index of a starting PRB of the sensing reference signal relative to CRBO, or in other words, $K_0$ represents a frequency-domain offset of the starting PRB of the sensing reference signal relative to CRBO, expressed as the number of PRBs;

$k_0$ represents an index of a starting subcarrier of the sensing reference signal within a PRB where the starting subcarrier is located.

It may be understood that the several patterns for the sensing reference signal provided above are only applicable to a single-port case and do not support a multiple-port case, and cannot support multi-beam scanning. In this case, the sensing transmitter may only perform single-beam scanning, resulting in a longer time to complete sensing of surrounding targets. In view of this, embodiments of the disclosure consider extending from the single-port sensing reference signal to the multiple-port sensing reference signals, thereby supporting multi-beam scanning.

FIG. 2 is an interaction diagram illustrating a sensing method according to an embodiment of the disclosure. As illustrated in FIG. 2, the sensing method includes the following.

At step S2101, a sensing transmitter determines patterns of multiple sensing reference signal ports.

In some embodiments, the sensing reference signal ports may refer to two or more ports.

In some embodiments, a respective pattern of each sensing reference signal port may be determined based on a frequency-domain pattern and a time-domain pattern.

In some embodiments, the frequency-domain pattern of the sensing reference signal may be determined by, but is not limited to, one of the following.

(1) Coprime Integer-Based Multi-port Sensing Reference Signals

In some embodiments, the frequency-domain pattern of each sensing reference signal port may be expressed as one of:

$$S = \left\{ q \cdot P \cdot K_{min} + N_{subc}^{PRB} \cdot K_0 + k_0 + m \mid q = 0,1,\cdots,Q-1 \right\} \cup \left\{ p \cdot Q \cdot K_{min} + N_{subc}^{PRB} \cdot K_0 + k_0 + m \mid p = 0,1,\cdots,2P-1 \right\};$$

$$S = \left\{ q \cdot P \cdot K_{min} + N_{subc}^{PRB} \cdot K_0 + k_0 + m \mid q = 0,1,\cdots,Q-1 \right\} \cup \left\{ p \cdot Q \cdot K_{min} + N_{subc}^{PRB} \cdot K_0 + k_0 + m \mid p = 1,\cdots,2P-1 \right\};$$

or

$$S = \left\{ q \cdot P \cdot K_{min} + N_{subc}^{PRB} \cdot K_0 + k_0 + m \mid q = 1,\cdots,Q-1 \right\} \cup \left\{ p \cdot Q \cdot K_{min} + N_{subc}^{PRB} \cdot K_0 + k_0 + m \mid p = 0,1,\cdots,2P-1 \right\}.$$

S represents a set of subcarrier positions occupied by the frequency-domain pattern of each sensing reference signal port.

P and Q are a pair of coprime integers, that is, a greatest common divisor of P and Q is 1, and P is less than Q.

$K_{min}$ represents a minimum frequency-domain interval between subcarriers where sensing reference signals, adjacent in a frequency domain, of each sensing reference signal port are located. $K_{min}$ is expressed as the number of subcarriers.

$N_{subc}^{PRB}$ represents the number of subcarriers included in one PRB (e.g., 12 subcarriers).

$K_0$ represents an index of a starting PRB of each sensing reference signal port relative to CRBO. In other words, $K_0$ represents a frequency-domain offset of the starting PRB of each sensing reference signal port relative to CRBO, expressed in number of PRBs.

$k_0$ represents an index of a starting subcarrier of each sensing reference signal port within a PRB (starting PRB) where the starting subcarrier is located. For example, $k_0 \in [0, N_{subc}^{PRB})$.

m represents a port index of each sensing reference signal port, and m is a non-negative integer less than $K_{min}$. For example, $m \in [0, K_{min})$.

According to the above implementation, the coprime integer-based multi-port sensing reference signals may achieve a higher uniform degree of freedom (uDoF) and higher resolution in the Khatri-Rao subspace.

In some embodiments, the frequency-domain pattern of each sensing reference signal port may be determined based on above related parameters of the frequency-domain pattern (e.g., P, Q, $K_{min}$, $K_0$, $k_0$).

In some embodiments, at least one of above related parameters of the frequency-domain pattern may be notified to the sensing receiver through signaling.

(2) Nested Multi-port Sensing Reference Signals

In some embodiments, the frequency-domain pattern of each sensing reference signal port may be expressed as one of:

$$S = \left\{ n \cdot K_{min} + N_{subc}^{PRB} \cdot K_0 + k_0 + m \mid n = 0,\cdots,\left\lfloor \frac{N}{2} \right\rfloor \right\} \cup \left\{ \left( n \cdot \left\lfloor \frac{N}{2} \right\rfloor + n - 1 \right) \cdot K_{min} + N_{subc}^{PRB} \cdot K_0 + k_0 + m \mid n = 1,\cdots,\left\lceil \frac{N}{2} \right\rceil \right\};$$

$$S = \left\{ n \cdot K_{min} + N_{subc}^{PRB} \cdot K_0 + k_0 + m \mid n = 0,\cdots,\left\lfloor \frac{N}{2} \right\rfloor - 1 \right\} \cup \left\{ \left( n \cdot \left\lfloor \frac{N}{2} \right\rfloor + n - 1 \right) \cdot K_{min} + N_{subc}^{PRB} \cdot K_0 + k_0 + m \mid n = 1,\cdots,\left\lceil \frac{N}{2} \right\rceil \right\};$$

or

$$S = \left\{ n \cdot K_{min} + N_{subc}{}^{PRB} \cdot K_0 + k_0 + m \mid n = 0, \cdots, \left\lfloor \frac{N}{2} \right\rfloor \right\} \cup \left\{ \left[ (n+1) \cdot \left\lfloor \frac{N}{2} \right\rfloor + n \right] \cdot K_{min} + N_{subc}{}^{PRB} \cdot K_0 + k_0 + m \mid n = 1, \cdots, \left\lfloor \frac{N}{2} \right\rfloor - 1 \right\}.$$

S represents a set of subcarrier positions occupied by the frequency-domain pattern of each sensing reference signal port.

N represents the number of subcarriers occupied by the frequency-domain pattern of each sensing reference signal port.

$K_{min}$ represents a minimum frequency-domain interval between subcarriers where sensing reference signals, adjacent in a frequency domain, of each sensing reference signal port are located. $K_{min}$ is expressed as the number of subcarriers.

$N_{subc}{}^{PRB}$ represents the number of subcarriers included in one PRB (e.g., 12 subcarriers).

$K_0$ represents an index of a starting PRB of each sensing reference signal port relative to CRBO. In other words, $K_0$ represents a frequency-domain offset of the starting PRB of each sensing reference signal port relative to CRBO, expressed in number of PRBs.

$k_0$ represents an index of a starting subcarrier of each sensing reference signal port within a PRB (starting PRB) where the starting subcarrier is located. For example, $k_0 \in [0, N_{subc}{}^{PRB})$.

m represents a port index of each sensing reference signal port, and m is a non-negative integer less than $K_{min}$. For example, $m \in [0, K_{min})$.

According to the above implementation, the nested multi-port sensing reference signals may achieve a higher uniform degree of freedom (uDoF) and higher resolution in the Khatri-Rao subspace.

In some embodiments, the frequency-domain pattern of each sensing reference signal port may be determined based on above related parameters of the frequency-domain pattern (e.g., N, $K_{min}$, $K_0$, $k_0$).

In some embodiments, at least one of above related parameters of the frequency-domain pattern may be notified to the sensing receiver through signaling.

(3) Uniform Multi-port Sensing Reference Signals

In some embodiments, the frequency-domain pattern of each sensing reference signal port may be expressed as:

$$S = \left\{ n \cdot K_1 + N_{subc}{}^{PRB} \cdot K_0 + k_0 + m \mid n = 0, \cdots, N-1 \right\}.$$

S represents a set of subcarrier positions occupied by the frequency-domain pattern of each sensing reference signal port.

N represents the number of subcarriers occupied by the frequency-domain pattern of each sensing reference signal port.

$K_1$ represents a frequency-domain interval between subcarriers where sensing reference signals, adjacent in a frequency domain, of each sensing reference signal port are located. For example, $K_1$ is expressed as the number of subcarriers.

$N_{subc}{}^{PRB}$ represents the number of subcarriers included in one PRB (e.g., 12 subcarriers).

$K_0$ represents an index of a starting PRB of each sensing reference signal port relative to CRBO. In other words, $K_0$ represents a frequency-domain offset of the starting PRB of each sensing reference signal port relative to CRBO, expressed as the number of PRBs.

$k_0$ represents an index of a starting subcarrier of each sensing reference signal port within a PRB (starting PRB) where the starting carrier is located. For example, $k_0 \in [0, N_{subc}{}^{PRB}$

m represents a port index of each sensing reference signal port, and m is a non-negative integer less than $K_{min}$. For example, $m \in [0, K_{min})$.

According to the above implementation, the frequency-domain pattern of each sensing reference signal port adopts a uniform comb pattern, which is beneficial for quickly determining the frequency-domain pattern of each sensing reference signal port.

In some embodiments, the frequency-domain pattern of each sensing reference signal port may be determined based on above related parameters of the frequency-domain pattern (e.g., N, $K_1$, $K_0$, $k_0$).

In some embodiments, at least one of above related parameters of the frequency-domain pattern may be notified to the sensing receiver through signaling.

In some embodiments, a time-domain pattern of each sensing reference signal port may also be determined based on related parameters of the time-domain pattern.

In some embodiments, at least one of related parameters of the time-domain pattern may also be notified to the sensing receiver through signaling.

At step S2102, the sensing transmitter sends parameter(s) to the sensing receiver.

In some embodiments, the sent parameter(s) is/are used by the sensing receiver to determine the pattern of each sensing reference signal port.

In some embodiments, the sent parameter(s) includes/include a first parameter. The first parameter is used for determining the frequency-domain pattern of each sensing reference signal port.

In some embodiments, the sent parameter(s) includes/include a second parameter. The second parameter is used for determine the time-domain pattern of each sensing reference signal port.

In some embodiments, the sent parameter(s) includes/include the first parameter and the second parameter.

In some embodiments, the name of the first parameter is not limited, for example, it may be "related parameter of the frequency-domain pattern" or others. For example, for contents included in the first parameter, reference may be made to the related parameters of the frequency-domain pattern in step S2101.

In some embodiments, the name of the second parameter is not limited, for example, it may be "related parameters of the time-domain pattern" or others.

In some embodiments, the sensing transmitter sends the first parameter to the sensing receiver. For example, the sensing receiver receives the first parameter sent by the sensing transmitter.

In some embodiments, the sensing transmitter sends the second parameter to the sensing receiver. For example, the sensing receiver receives the second parameter sent by the sensing transmitter.

In some embodiments, the sensing transmitter sends the first parameter and the second parameter to the sensing receiver. For example, the sensing receiver receives the first parameter and the second parameter sent by the sensing transmitter. For example, the first parameter and the second parameter may be carried in the same message and sent together, or may be sent separately.

In some embodiments, the sensing transmitter sends first signaling to the sensing receiver, where the first signaling carries the first parameter and/or the second parameter.

According to the above implementation, the sensing transmitter sends parameter(s) to the sensing receiver, facilitating the sensing receiver to determine the pattern of each sensing reference signal port based on the parameter(s) sent by the sensing transmitter, and receive and measure the multi-port sensing reference signals.

According to the above implementation (1), the first parameter includes at least one of:

the number of ports M, where the port indexes are m = {0, 1, ..., M-1};
a set of port indexes: {$m_1$, $m_2$, ...};
P and Q;
$K_{min}$;
$K_0$; or
$k_0$.

According to the above implementation (2), the first parameter includes at least one of:

the number of ports M, where the port indexes are m = {0, 1, ..., M-1};
a set of port indexes: {$m_1$, $m_2$, ...};
N;
$K_{min}$;
$K_0$; or
$k_0$.

According to the above implementation (3), the first parameter includes at least one of:

the number of ports M, where the port indexes are m={0, 1, ..., M-1};
a set of port indexes: {$m_1$, $m_2$, ...};
N;
$K_1$;
$K_0$;
$k_0$.

According to implementations (1) to (3), the second parameter includes at least one of:

an index of a starting slot of each sensing reference signal port: $s_0$;

a time-domain period of each sensing reference signal port: $T_{slot}$, for example, $T_{slot}$ is expressed as the number of slots;

the number of slots occupied by each sensing reference signal port: $s_{num}$;

a set of OFDM symbols within a slot for each sensing reference signal port: $\mathcal{L}$;

an index of a starting OFDM symbol of each sensing reference signal port within a slot (starting slot) $\ell_0$ where the starting OFDM symbol is located;

the total number of OFDM symbols occupied by each sensing reference signal port: $|\mathcal{L}|$; or

a symbol interval for each sensing reference signal port: $\ell_\Delta$, for example, $\ell_\Delta$ indicates an interval between adjacent OFDM symbols occupied by the time-domain pattern of a sensing reference signal port within one slot, expressed as the number of OFDM symbols, for example, $\ell_\Delta = \ell_1 - \ell_0 = \ell_2 - \ell_1$.

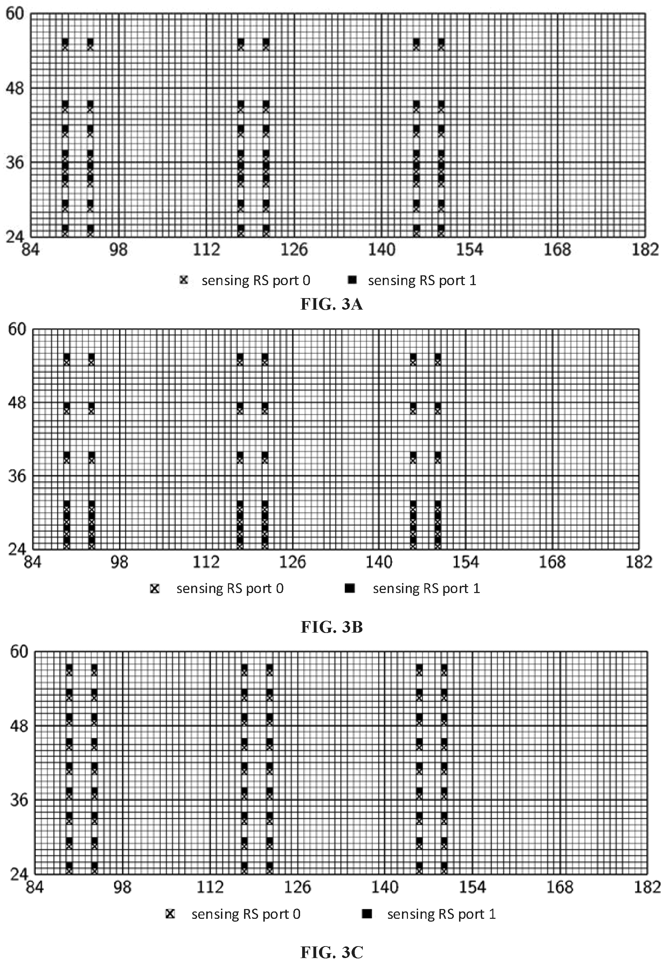

FIG. 3A is an example schematic diagram illustrating patterns of two sensing reference signal ports according to implementation (1). As illustrated in FIG. 3A, for coprime integer-based 2-port sensing reference signals, the patterns of the two sensing reference signal ports are represented by resource elements (REs) filled with color and shape respectively. It may be seen that the related parameters of the frequency-domain patterns include: $P = 2$, $Q = 5$, $K_{min} = 2$, $K_0 = 2$, $k_0 = 0$, and the related parameters of the time-domain patterns include: $\mathcal{L} = \{5,9\}$, $s_0 = 6$, $T_{slot} = 2$, $s_{num} = 3$.

FIG. 3B is an example schematic diagram illustrating patterns of two sensing reference signal ports according to implementation (2). As illustrated in FIG. 3B, for nested 2-port sensing reference signals, the patterns of the two sensing reference signal ports are represented by resource elements (REs) filled with color and shape respectively. It may be seen that the related parameters of the frequency-domain patterns include: $N = 7$, $K_{min} = 2$, $K_0 = 2$, $k_0 = 0$, and the related parameters of the time-domain patterns include: $\mathcal{L} = \{5,9\}$, $s_0 = 6$, $T_{slot} = 2$, $s_{num} = 3$.

FIG. 3C is an example schematic diagram illustrating patterns of two sensing reference signal ports according to implementation (3). As illustrated in FIG. 3C, for uniform 2-port sensing reference signals, the patterns of the two sensing reference signal ports are represented by resource elements (REs) filled with color and shape respectively. It may be seen that the related parameters of the frequency-domain patterns include: $N = 9$, $K_1 = 4$, $K_0 = 2$, $k_0 = 0$, and the related parameters of the time-domain patterns include: $\mathcal{L} = \{5,9\}$, $s_0 = 6$, $T_{slot} = 2$, $s_{num} = 3$.

In some embodiments, at least one of the first parameter and/or the second parameter may be sent through at least one of Downlink Control Information (DCI), a Media Access Control-Control Element (MAC CE) message, or a Radio Resource Control (RRC) message.

In some embodiments, at least one of the first parameter and/or the second parameter may be sent to the sensing receiver through an RRC message.

In some embodiments, a candidate value set of at least one of the first parameter and/or the second parameter may be sent to the sensing receiver first through an RRC message, and then for any one parameter, one candidate value from the candidate value set of that parameter is dynamically indicated through DCI.

In some embodiments, multiple sets of parameters may be sent to the sensing receiver first through an RRC message, where a set of parameters includes at least one of the first parameter and/or the second parameter, and then one of the sets of parameters is dynamically indicated through DCI.

In some embodiments, a candidate value set of at least one of the first parameter and/or the second parameter may be sent to the sensing receiver first through an RRC message, then for any one parameter, at least one candidate value from the candidate value set of that parameter is activated through a MAC CE message, and then one candidate value among the at least one activated candidate values of that parameter is dynamically indicated through DCI. For example, one or more candidate values from the candidate value set of that parameter may be deactivated through a MAC CE message.

In some embodiments, multiple sets of parameters may be sent to the sensing receiver first through an RRC message, where a set of parameters includes at least one of the first parameter and/or the second parameter, then at least one set of parameters is activated through a MAC CE message, and then one set of parameters among the activated at least one set of parameters is dynamically indicated through DCI. For example, one or more sets of parameters may be deactivated through a MAC CE message.

In some embodiments, step S2101 and step S2102 may be performed in a different order or simultaneously.

In some embodiments, this step is optional, for example, in monostatic mode, the sensing transmitter may not send parameters.

At step S2103, the sensing receiver determines patterns of multiple sensing reference signal ports based on the parameter(s) sent by the sensing transmitter.

In some embodiments, the sensing receiver receives the first parameter sent by the sensing transmitter.

In some embodiments, the sensing receiver receives the second parameter sent by the sensing transmitter.

In some embodiments, the sensing receiver receives the first parameter and the second parameter sent by the sensing transmitter.

In some embodiments, the sensing receiver determines the frequency-domain pattern of each sensing reference signal port based on the first parameter.

In some embodiments, the sensing receiver determines the time-domain pattern of each sensing reference signal port based on the second parameter.

In some embodiments, the sensing receiver determines the pattern of each sensing reference signal port based on the first parameter and the second parameter.

In some embodiments, the implementation for the sensing receiver to determine the patterns of the sensing reference signal ports is consistent with the implementation for the sensing transmitter to determine the patterns of the sensing reference signal ports.

For implementations of step S2103, reference may be made to the implementations of step S2101 in FIG. 2 and to other relevant parts of the embodiment related to FIG. 2, which are not repeated here.

At step S2104, the sensing transmitter transmits multi-port sensing reference signals based on the patterns of the sensing reference signal ports.

In some embodiments, the sensing receiver receives the multi-port sensing reference signals based on the patterns of the sensing reference signal ports.

At step S2105, the sensing receiver performs measurements on the received multi-port sensing reference signals.

According to the above implementation, embodiments of the disclosure extend the sensing reference signal from a single port to multiple ports, thereby supporting multi-beam scanning, which is beneficial for reducing the time required for wireless sensing. In addition, in implementations, both the coprime integer-based multi-port sensing reference signals b and the nested multi-port sensing reference signals may achieve a higher uDoF and higher resolution in the Khatri-Rao subspace.

The sensing method according to embodiments of the disclosure may include, but is not limited to, at least one of steps S2101 to S2105. For example, step S2101 may be implemented as an independent embodiment, step S2101 and step S2102 may be implemented as an independent embodiment, step S2101, step S2102, and step S2104 may be implemented as an independent embodiment, step S2103 may be implemented as an independent embodiment, or step S2103 and step S2105 may be implemented as an independent embodiment.

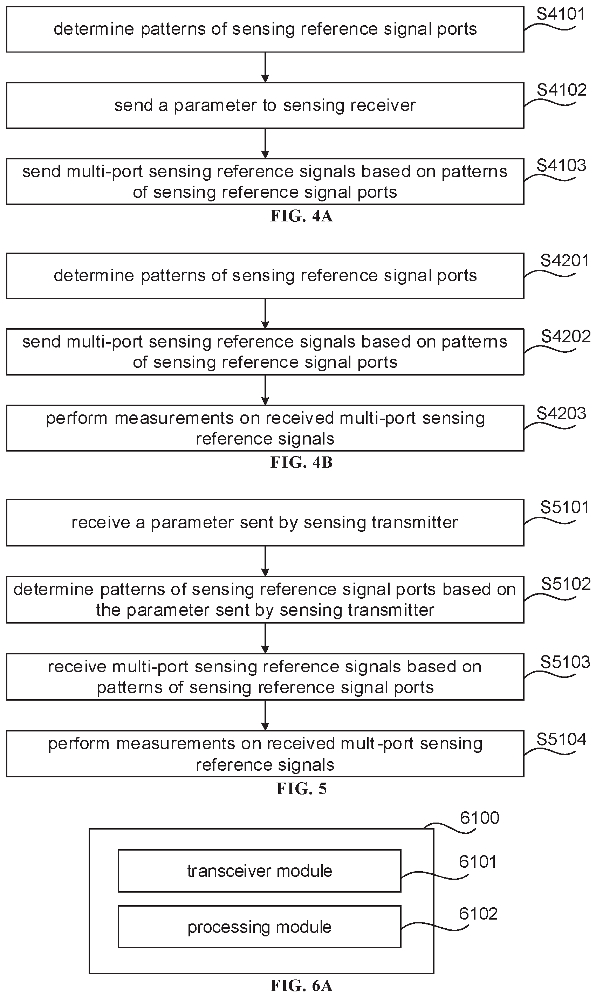

FIG. 4A is a flowchart illustrating a sensing method according to an embodiment of the disclosure. The sensing method is performed by a sensing transmitter. As illustrated in FIG. 4A, the sensing method includes the following.

At step S4101, patterns of multiple sensing reference signal ports are determined.

For implementations of step S4101, reference may be made to the implementations of step S2101 in FIG. 2 and to other relevant parts of the embodiment related to FIG. 2, which are not repeated here.

At step S4102, parameter(s) is/are sent to a sensing receiver.

In some embodiments, the sent parameter(s) is/are used by the sensing receiver to determine the pattern of each sensing reference signal port.

In some embodiments, the sent parameter(s) includes/include a first parameter. The first parameter is used for determining the frequency-domain pattern of each sensing reference signal port.

In some embodiments, the sent parameter(s) includes/include a second parameter. The second parameter is used for determining the time-domain pattern of each sensing reference signal port.

In some embodiments, the sent parameter(s) includes/include the first parameter and the second parameter.

In some embodiments, at least one of the first parameter and/or the second parameter may be sent through at least one of DCI, a MAC CE message, or an RRC message.

In some embodiments, at least one of the first parameter and/or the second parameter may be sent to the sensing receiver through an RRC message.

For implementations of step S4102, reference may be made to the implementations of step S2102 in FIG. 2 and to other relevant parts of the embodiment related to FIG. 2, which are not repeated here.

In some embodiments, step S4101 and step S4102 may be performed in a different order or simultaneously.

At step S4103, multi-port sensing reference signals are sent based on the patterns of the multiple sensing reference signal ports.

According to the above implementation, the sensing transmitter transmits the multi-port sensing reference signals based on the patterns of the multiple sensing reference signal ports, extending the sensing reference signal from a single port to multiple ports, thereby supporting multi-beam scanning, which is beneficial for reducing the time required for wireless sensing. Moreover, in bistatic mode, related parameters may be sent to the sensing receiver, and the sensing receiver may determine the patterns of the multiple sensing reference signal ports based on the parameters sent by the sensing transmitter, and then receive and measure the multi-port sensing reference signals, thereby completing wireless sensing.

FIG. 4B is a flowchart illustrating a sensing method according to an embodiment of the disclosure. The sensing method is performed by a sensing transmitter. As illustrated in FIG. 4B, the sensing method includes the following.

At step S4201, patterns of multiple sensing reference signal ports are determined.

For implementations of step S4201, reference may be made to the implementations of step S2101 in FIG. 2 and to other relevant parts of the embodiment related to FIG. 2, which are not repeated here.

At step S4202, multi-port sensing reference signals are sent based on the patterns of the multiple sensing reference signal ports.

At step S4203, measurements are performed on the received multi-port sensing reference signals.

According to the above implementation, the sensing transmitter transmits the multi-port sensing reference signals based on the patterns of the multiple sensing reference signal ports, extending the sensing reference signal from a single port to multiple ports, thereby supporting multi-beam scanning, which is beneficial for reducing the time required for wireless sensing. Moreover, in monostatic mode, the sensing transmitter may receive the multi-port sensing reference signals and perform measurements on the received multi-port sensing reference signals, thereby completing wireless sensing.

FIG. 5 is a flowchart illustrating a sensing method according to an embodiment of the disclosure. The sensing method is performed by a sensing receiver. As illustrated in FIG. 5, the sensing method includes the following.

At step S5101, parameter(s) sent by a sensing transmitter is/are received.

In some embodiments, the sent parameter(s) is/are used by the sensing receiver to determine the pattern of each sensing reference signal port.

In some embodiments, the sent parameter(s) includes/include a first parameter. The first parameter is used for determining the frequency-domain pattern of each sensing reference signal port.

In some embodiments, the sent parameter(s) includes/include a second parameter. The second parameter is used for determining the time-domain pattern of each sensing reference signal port.

In some embodiments, the sent parameter(s) includes/include the first parameter and the second parameter.

For implementations of step S5101, reference may be made to the implementations of step S2102 in FIG. 2 and to other relevant parts of the embodiment related to FIG. 2, which are not repeated here.

At step S5102, patterns of multiple sensing reference signal ports are determined based on the parameter(s) sent by the sensing transmitter.

For implementations of step S5102, reference may be made to the implementations of step S2103 in FIG. 2, the implementations of step S2101, and other relevant parts of the embodiment related to FIG. 2, which are not repeated here.

At step S5103, multi-port sensing reference signals are received based on the patterns of the multiple sensing reference signal ports.

At step S5104, measurements are performed on the received multi-port sensing reference signals.

According to the above implementation, the sensing receiver may receive the parameter(s) sent by the sensing transmitter, determine the patterns of the multiple sensing reference signal ports based on the parameter(s) sent by the sensing transmitter, and receive and measure the multi-port sensing reference signals based on the patterns of the multiple sensing reference signal ports, thereby completing wireless sensing. Moreover, the multi-port sensing reference signals may support multi-beam scanning, which is beneficial for reducing the time required for wireless sensing.

Embodiments of the disclosure further provide apparatuses for implementing any of above methods. For example, an apparatus is provided. The apparatus includes units or modules for implementing steps performed by the sensing transmitter in any of above methods. As another example, another apparatus is provided. The apparatus includes units or modules for implementing steps performed by the sensing receiver in any of above methods.

It should be understood that the division of units or modules in above apparatuses is only a division of logical functions. In actual implementation, they may be fully or partially integrated into one physical entity or physically separated. In addition, the units or modules in the apparatuses may be implemented in the form of a processor calling software. For example, the apparatus includes a processor and a memory. The processor is connected to the memory. Instructions are stored in the memory. The processor calls the instructions stored in the memory to implement any of above methods or implement the functions of the units or modules of above apparatuses. The processor is, for example, a general-purpose processor, such as a central processing unit (CPU) or a microprocessor. The memory is a memory inside the apparatus or a memory outside the apparatus. Or the units or modules in the apparatus may be implemented in the form of hardware circuits, and the functions of some or all of the units or modules may be implemented through the design of the hardware circuit. The above hardware circuit may be understood as one or more processors. For example, in an implementation, the above hardware circuit is an application-specific integrated circuit (ASIC), and the functions of some or all of the above units or modules are realized by designing logical relationships of components within the circuit. As another example, in another implementation, the above hardware circuit may be implemented by a programmable logic device (PLD), taking a Field Programmable Gate Array (FPGA) as an example, which may include a large number of logic gates, and connection relationships between logic gates are configured through a configuration file, thereby realizing the functions of some or all of the above units or modules. All units or modules of the above apparatuses may be implemented entirely in the form of a processor calling software, or entirely in the form of hardware circuits, or partially in the form of a processor calling software and the remaining part in the form of hardware circuits.

In embodiments of the disclosure, a processor is a circuit with signal processing capability. In an implementation, the processor may be a circuit with instruction reading and execution capability, such as a central processing unit (CPU), a microprocessor, a graphics processing unit (GPU) (which may be understood as a microprocessor), or a digital signal processor (DSP). In another implementation, the processor may realize a certain function through the logical relationships of the hardware circuit, where the logical relationships of the hardware circuit are fixed or reconfigurable. For example, the processor is a hardware circuit implemented by an application-specific integrated circuit (ASIC) or a programmable logic device (PLD), such as an FPGA. In a reconfigurable hardware circuit, a process of the processor loading a configuration file to implement the hardware circuit configuration may be understood as a process of the processor loading instructions to implement the functions of some or all of above units or modules. In addition, the processor may also be a hardware circuit designed specifically for artificial intelligence, which may be understood as an ASIC, such as a neural network processing unit (NPU), a tensor processing unit (TPU), a deep learning processing unit (DPU), or the like.

FIG. 6A is a schematic diagram illustrating a structure of a sensing transmitter according to an embodiment of the disclosure. As illustrated in FIG. 6A, a sensing transmitter 6100 may include at least one of a transceiver module 6101 or a processing module 6102. In some embodiments, the processing module is configured to determine patterns of multiple sensing reference signal ports. The transceiver module is configured to transmit multi-port sensing reference signals based on the patterns of the multiple sensing reference signal ports. For example, the transceiver module is configured to perform at least one of communication (sending and/or receiving) steps (e.g., step S2102, step S2104, but not limited thereto) performed by the sensing transmitter in any of above methods, which are not repeated here. For example, the processing module is configured to perform at least one of the steps (e.g., step S2101, but not limited thereto) performed by the sensing transmitter in any of above methods, which is not repeated here.

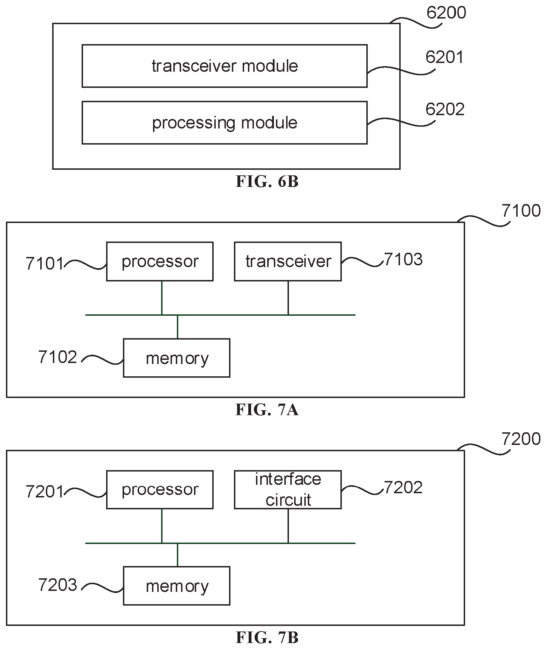

FIG. 6B is a schematic diagram illustrating a structure of a sensing receiver according to an embodiment of the disclosure. As illustrated in FIG. 6B, a sensing receiver 6200 may include at least one of a transceiver module 6201 or a processing module 6202. In some embodiments, the transceiver module is configured to receive parameter(s) sent by a sensing transmitter. The processing module is configured to determine patterns of multiple sensing reference signal ports based on the parameter(s) sent by the sensing transmitter. The transceiver module is configured to receive multi-port sensing reference signals based on the patterns of the multiple sensing reference signal ports. The processing module is configured to perform measurements on the multi-port sensing reference signals. For example, the transceiver module is configured to perform at least one of communication (sending and/or receiving) steps performed by the sensing receiver in any of above methods, which are not repeated here. For example, the processing module is configured to perform at least one of other steps (e.g., step S2103, step S2105, but not limited thereto) performed by the sensing receiver in any of above methods, which are not repeated here.

In some embodiments, the transceiver module may include a sending module and/or a receiving module. The sending module and the receiving module may be separate or integrated. For example, the term "transceiver module" may be interchanged with "transceiver".

In some embodiments, the processing module may be one module or may include multiple sub-modules. For example, the multiple sub-modules respectively perform all or part of the steps required to be performed by the processing module. For example, the term "processing module" may be interchanged with "processor".

FIG. 7A is a schematic diagram illustrating a structure of a communication device 7100 according to an embodiment of the disclosure. The communication device 7100 may be a network device (e.g., access network device, etc.), or a terminal (e.g., user equipment, etc.), or a chip, a chip system, or a processor that supports the network device to implement any of above methods, or a chip, a chip system, or a processor that supports the terminal to implement any of above methods. The communication device 7100 may be configured to implement the methods according to the above method embodiments, and for details, reference may be made to the description of the above method embodiments. In some embodiments, the communication device 7100 may implement the methods performed by the sensing transmitter according to above the method embodiments. In some embodiments, the communication device 7100 may implement the methods performed by the sensing receiver according to the above method embodiments.

As illustrated in FIG. 7A, the communication device 7100 includes one or more processors 7101. The processor 7101 may be a general-purpose processor or a special-purpose processor, etc., for example, it may be a baseband processor or a central processor. The baseband processor may be configured to process communication protocols and communication data, and the central processor may be configured to control communication devices (e.g., base stations, baseband chips, terminals, terminal chips, DUs or CUs, etc.), execute programs, and process data of the programs. The communication device 7100 is configured to perform any of above methods.

In some embodiments, the communication device 7100 further includes one or more memories 7102 for storing instructions. For example, all or part of the memory 7102 may also be located outside the communication device 7100.

In some embodiments, the communication device 7100 further includes one or more transceivers 7103. When the communication device 7100 includes one or more transceivers 7103, the transceiver 7103 performs at least one of communication (sending and/or receiving) steps (e.g., step S2102, step S2104, but not limited thereto) in above methods, and the processor 7101 performs at least one of other steps (e.g., step S2101, step S2103, step S2105, but not limited thereto).

In some embodiments, a transceiver may include a receiver and/or a transmitter. The receiver and the transmitter may be separate or integrated. For example, terms such as "transceiver", "transceiver unit", "transceiver machine", and "transceiver circuit" may be interchanged. Terms such as "transmitter", "transmitting unit", "transmitting machine", and "transmitting circuit" may be interchanged. Terms such as "receiver", "receiving unit", "receiving machine", and "receiving circuit" may be interchanged.

In some embodiments, the communication device 7100 may include one or more interface circuits. For example, the interface circuit is connected to the memory 7102. The interface circuit may be configured to receive signals from the memory 7102 or other devices, and may be configured to send signals to the memory 7102 or other devices. For example, the interface circuit may read instructions stored in the memory 7102 and send the instructions to the processor 7101.

The communication device 7100 according to the above embodiments may be a network device or a terminal, but the scope of the communication device 7100 according to the disclosure is not limited thereto. The structure of the communication device 7100 may not be limited by FIG. 7A. The communication device may be an independent device or may be part of a larger device. For example, the communication device may be: (1) an independent integrated circuit (IC), a chip, a chip system, or subsystem; (2) a collection of one or more ICs, for example, the above collection may also include storage components for storing data and programs; (3) an ASIC, such as a modem; (4) a module that may be embedded in other devices; (5) a receiver, a terminal, an intelligent terminal, a cellular phone, a wireless device, a handset, a mobile unit, a vehicle-mounted device, a network device, a cloud device, an artificial intelligence device, etc.; (6) others.

FIG. 7B is a schematic diagram illustrating a structure of a chip 7200 according to an embodiment of the disclosure. For the case where the communication device 7100 may be a chip or a chip system, reference may be made to the schematic diagram illustrating the structure of the chip 7200 illustrated in FIG. 7B, but it is not limited thereto.

The chip 7200 includes one or more processors 7201. The chip 7200 is configured to perform any of above methods.

In some embodiments, the chip 7200 further includes one or more interface circuits 7202. For example, the interface circuit 7202 is connected to a memory 7203. The interface circuit 7202 may be configured to receive signals from the memory 7203 or other devices, and the interface circuit 7202 may be configured to send signals to the memory 7203 or other devices. For example, the interface circuit 7202 may read instructions stored in the memory 7203 and send the instructions to the processor 7201.

In some embodiments, the interface circuit 7202 performs at least one of communication (sending and/or receiving) steps (e.g., step S2102, step S2104, but not limited thereto) in above methods, and the processor 7201 performs at least one of other steps (e.g., step S2101, step S2103, step S2105, but not limited thereto).

In some embodiments, terms such as "interface circuit", "interface", "transceiver pin", and "transceiver" may be interchanged.

In some embodiments, the chip 7200 further includes one or more memories 7203 for storing instructions. For example, all or part of the memory 7203 may be located outside the chip 7200.

The disclosure also provides a storage medium having instructions stored thereon. When the instructions are executed on the communication device 7100, the communication device 7100 is caused to perform any of above methods. For example, the storage medium is an electronic storage medium. For example, the storage medium is a computer-readable storage medium, but is not limited thereto, and may also be a storage medium readable by other devices. For example, the storage medium may be a non-transitory storage medium, but is not limited thereto, and may also be a transitory storage medium.

The disclosure also provides a program product. When the program product is executed by the communication device 7100, the communication device 7100 is caused to perform any of above methods. For example, the program product is a computer program product.

The disclosure also provides a computer program. When the computer program runs on a computer, the computer is caused to perform any of above methods.

**Claims**

1. A sensing method, performed by a sensing transmitter, the method comprising:

   determining patterns of a plurality of sensing reference signal ports; and
   sending multi-port sensing reference signals based on the patterns of the plurality of sensing reference signal ports.

2. The method of claim 1, wherein a frequency-domain pattern of each sensing reference signal port satisfies one of:

$$S=\left\{q\cdot P\cdot K_{min}+N_{subc}^{PRB}\cdot K_0+k_0+m\mid q=0,1,\cdots,Q-1\right\}\cup\left\{p\cdot Q\cdot K_{min}+N_{subc}^{PRB}\cdot K_0+k_0+m\mid p=0,1,\cdots,2P-1\right\};$$

$$S=\left\{q\cdot P\cdot K_{min}+N_{subc}^{PRB}\cdot K_0+k_0+m\mid q=0,1,\cdots,Q-1\right\}\cup\left\{p\cdot Q\cdot K_{min}+N_{subc}^{PRB}\cdot K_0+k_0+m\mid p=1,\cdots,2P-1\right\};$$

or

$$S=\left\{q\cdot P\cdot K_{min}+N_{subc}^{PRB}\cdot K_0+k_0+m\mid q=1,\cdots,Q-1\right\}\cup\left\{p\cdot Q\cdot K_{min}+N_{subc}^{PRB}\cdot K_0+k_0+m\mid p=0,1,\cdots,2P-1\right\};$$

wherein S represents a set of subcarrier positions occupied by the frequency-domain pattern of each sensing reference signal port;

P and Q are a pair of coprime integers, and P is less than Q;

$K_{min}$ represents a minimum frequency-domain interval between subcarriers where sensing reference signals, adjacent in a frequency domain, of each sensing reference signal port are located;

$N_{subc}^{PRB}$ represents a number of subcarriers comprised in one physical resource block (PRB);

$K_0$ represents an index of a starting PRB of each sensing reference signal port relative to common resource block 0 (CRB0);

$k_0$ represents an index of a starting subcarrier of each sensing reference signal port within a PRB where the starting subcarrier is located; and

m represents a port index of each sensing reference signal port, and m is a non-negative integer less than $K_{min}$.

3. The method of claim 2, further comprising:

sending a first parameter to a sensing receiver, wherein the first parameter is used for determining the frequency-domain pattern of each sensing reference signal port;

the first parameter comprises at least one of:

a number of ports M;
a set of port indexes;
P and Q;
$K_{min}$;
$K_0$; or
$k_0$.

4. The method of claim 1, wherein a frequency-domain pattern of each sensing reference signal ports satisfies one of:

$$S=\left\{n\cdot K_{min}+N_{subc}^{PRB}\cdot K_0+k_0+m\mid n=0,\cdots,\left\lfloor\frac{N}{2}\right\rfloor\right\}\cup\left\{\left(n\cdot\left\lfloor\frac{N}{2}\right\rfloor+n-1\right)\cdot K_{min}+N_{subc}^{PRB}\cdot K_0+k_0+m\mid n=1,\cdots,\left\lceil\frac{N}{2}\right\rceil\right\};$$

$$S=\left\{n\cdot K_{min}+N_{subc}^{PRB}\cdot K_0+k_0+m\mid n=0,\cdots,\left\lfloor\frac{N}{2}\right\rfloor-1\right\}\cup\left\{\left(n\cdot\left\lfloor\frac{N}{2}\right\rfloor+n-1\right)\cdot K_{min}+N_{subc}^{PRB}\cdot K_0+k_0+m\mid n=1,\cdots,\left\lceil\frac{N}{2}\right\rceil\right\};$$

or

$$S=\left\{n\cdot K_{min}+N_{subc}^{PRB}\cdot K_0+k_0+m\mid n=0,\cdots,\left\lfloor\frac{N}{2}\right\rfloor\right\}\cup\left\{\left[(n+1)\cdot\left\lfloor\frac{N}{2}\right\rfloor+n\right]\cdot K_{min}+N_{subc}^{PRB}\cdot K_0+k_0+m\mid n=1,\cdots,\left\lceil\frac{N}{2}\right\rceil-1\right\};$$

wherein S represents a set of subcarrier positions occupied by the frequency-domain pattern of each sensing reference signal port;

N represents a number of subcarriers occupied by the frequency-domain pattern of each sensing reference signal port;

$K_{min}$ represents a minimum frequency-domain interval between subcarriers where sensing reference signals, adjacent in a frequency domain, of each sensing reference signal port are located;

$N_{subc}^{PRB}$ represents a number of subcarriers comprised in one physical resource block (PRB);

$K_0$ represents an index of a starting PRB of each sensing reference signal port relative to common resource block 0 (CRB0);

$k_0$ represents an index of a starting subcarrier of each sensing reference signal port within a PRB where the starting subcarrier is located; and

m represents a port index of each sensing reference signal port, and m is a non-negative integer less than $K_{min}$.

5.  The method of claim 4, further comprising:

    sending a first parameter to a sensing receiver, wherein the first parameter is used for determining the frequency-domain pattern of each sensing reference signal port;
    the first parameter comprises at least one of:

        a number of ports M;
        a set of port indexes;
        N;
        $K_{min}$;
        $K_0$; or
        $k_0$.

6.  The method of claim 1, wherein a frequency-domain pattern of each sensing reference signal port satisfies:

$$S = \left\{ n \cdot K_1 + N_{subc}^{PRB} \cdot K_0 + k_0 + m \mid n = 0, \cdots, N-1 \right\};$$

    wherein S represents a set of subcarrier positions occupied by the frequency-domain pattern of each sensing reference signal port;

    N represents a number of subcarriers occupied by the frequency-domain pattern of each sensing reference signal port;

    $K_1$ represents a frequency-domain interval between subcarriers where sensing reference signals, adjacent in a frequency domain, of each sensing reference signal port are located;

    $N_{subc}^{PRB}$ represents a number of subcarriers comprised in one physical resource block (PRB);

    $K_0$ represents an index of a starting PRB of each sensing reference signal port relative to common resource block 0 (CRB0);

    $k_0$ represents an index of a starting subcarrier of each sensing reference signal port within a PRB where the starting subcarrier is located; and

    m represents a port index of each sensing reference signal port, and m is a non-negative integer less than $K_{min}$.

7.  The method of claim 6, further comprising:

    sending a first parameter to a sensing receiver, wherein the first parameter is used for determining the frequency-domain pattern of each sensing reference signal port;
    the first parameter comprises at least one of:

        a number of ports M;
        a set of port indexes;
        N;
        $K_1$;
        $K_0$; or
        $k_0$.

8.  The method of any one of claims 1 to 7, further comprising:
    sending a second parameter to a sensing receiver, wherein the second parameter is used for determining a time-domain pattern of each sensing reference signal port.

9. The method of claim 8, wherein the second parameter comprises at least one of:

an index of a starting slot of each sensing reference signal port;
a time-domain period of each sensing reference signal port;
a number of slots occupied by each sensing reference signal port;
a set of Orthogonal Frequency Division Multiplexing (OFDM) symbols within a slot for each sensing reference signal port;
an index of a starting OFDM symbol of each sensing reference signal port within a slot where the starting OFDM symbol is located;
a total number of OFDM symbols occupied by each sensing reference signal port; or
a symbol interval for each sensing reference signal port.

10. The method of any one of claims 1 to 9, further comprising:

receiving the multi-port sensing reference signals; and
performing measurements on the multi-port sensing reference signals.

11. A sensing method, performed by a sensing receiver, the method comprising:

receiving a parameter sent by a sensing transmitter;
determining patterns of a plurality of sensing reference signal ports based on the parameter;
receiving multi-port sensing reference signals based on the patterns of the plurality of sensing reference signal ports; and
performing measurements on the multi-port sensing reference signals.

12. The method of claim 11, wherein a frequency-domain pattern of each sensing reference signal port satisfies one of:

$$S=\left\{q\cdot P\cdot K_{min}+N_{subc}^{PRB}\cdot K_0+k_0+m\,|\,q=0,1,\cdots,Q-1\right\}\cup\left\{p\cdot Q\cdot K_{min}+N_{subc}^{PRB}\cdot K_0+k_0+m\,|\,p=0,1,\cdots,2P-1\right\};$$

$$S=\left\{q\cdot P\cdot K_{min}+N_{subc}^{PRB}\cdot K_0+k_0+m\,|\,q=0,1,\cdots,Q-1\right\}\cup\left\{p\cdot Q\cdot K_{min}+N_{subc}^{PRB}\cdot K_0+k_0+m\,|\,p=1,\cdots,2P-1\right\};$$

or

$$S=\left\{q\cdot P\cdot K_{min}+N_{subc}^{PRB}\cdot K_0+k_0+m\,|\,q=1,\cdots,Q-1\right\}\cup\left\{p\cdot Q\cdot K_{min}+N_{subc}^{PRB}\cdot K_0+k_0+m\,|\,p=0,1,\cdots,2P-1\right\};$$

wherein S represents a set of subcarrier positions occupied by the frequency-domain pattern of each sensing reference signal port;
P and Q are a pair of coprime integers, and P is less than Q;
$K_{min}$ represents a minimum frequency-domain interval between subcarriers where sensing reference signals, adjacent in a frequency domain, of each sensing reference signal port are located;
$N_{subc}^{PRB}$ represents a number of subcarriers comprised in one physical resource block (PRB);
$K_0$ represents an index of a starting PRB of each sensing reference signal port relative to common resource block 0 (CRB0);
$k_0$ represents an index of a starting subcarrier of each sensing reference signal port within a PRB where the starting subcarrier is located; and
m represents a port index of each sensing reference signal port, and m is a non-negative integer less than $K_{min}$.

13. The method of claim 12, wherein receiving the parameter sent by the sensing transmitter comprises:

receiving a first parameter sent by the sensing transmitter, wherein the first parameter is used for determining the frequency-domain pattern of each sensing reference signal port;
the first parameter comprises at least one of:

a number of ports M;
a set of port indexes;
P and Q;
$K_{min}$;
$K_0$; or
$k_0$.

14. The method of claim 11, wherein a frequency-domain pattern of each sensing reference signal port satisfies one of:

$$S = \left\{ n \cdot K_{min} + N_{subc}^{PRB} \cdot K_0 + k_0 + m \mid n = 0, \cdots, \left\lfloor \frac{N}{2} \right\rfloor \right\} \cup \left\{ \left( n \cdot \left\lfloor \frac{N}{2} \right\rfloor + n - 1 \right) \cdot K_{min} + N_{subc}^{PRB} \cdot K_0 + k_0 + m \mid n = 1, \cdots, \left\lceil \frac{N}{2} \right\rceil \right\};$$

$$S = \left\{ n \cdot K_{min} + N_{subc}^{PRB} \cdot K_0 + k_0 + m \mid n = 0, \cdots, \left\lfloor \frac{N}{2} \right\rfloor - 1 \right\} \cup \left\{ \left( n \cdot \left\lfloor \frac{N}{2} \right\rfloor + n - 1 \right) \cdot K_{min} + N_{subc}^{PRB} \cdot K_0 + k_0 + m \mid n = 1, \cdots, \left\lceil \frac{N}{2} \right\rceil \right\};$$

or

$$S = \left\{ n \cdot K_{min} + N_{subc}^{PRB} \cdot K_0 + k_0 + m \mid n = 0, \cdots, \left\lfloor \frac{N}{2} \right\rfloor \right\} \cup \left\{ \left[ (n+1) \cdot \left\lfloor \frac{N}{2} \right\rfloor + n \right] \cdot K_{min} + N_{subc}^{PRB} \cdot K_0 + k_0 + m \mid n = 1, \cdots, \left\lceil \frac{N}{2} \right\rceil - 1 \right\};$$

wherein S represents a set of subcarrier positions occupied by the frequency-domain pattern of each sensing reference signal port;
N represents a number of subcarriers occupied by the frequency-domain pattern of each sensing reference signal port;
$K_{min}$ represents a minimum frequency-domain interval between subcarriers where sensing reference signals, adjacent in a frequency domain, of each sensing reference signal port are located;
$N_{subc}^{PRB}$ represents a number of subcarriers comprised in one physical resource block (PRB);
$K_0$ represents an index of a starting PRB of each sensing reference signal port relative to common resource block 0 (CRB0);
$k_0$ represents an index of a starting subcarrier of each sensing reference signal port within a PRB where the starting subcarrier is located; and
m represents a port index of each sensing reference signal port, and m is a non-negative integer less than $K_{min}$.

15. The method of claim 14, wherein receiving the parameter sent by the sensing transmitter comprises:

receiving a first parameter sent by the sensing transmitter, wherein the first parameter is used for determining the frequency-domain pattern of each sensing reference signal port;
the first parameter comprises at least one of:

a number of ports M;
a set of port indexes;
N;
$K_{min}$;
$K_0$; or
$k_0$.

16. The method of claim 11, wherein a frequency-domain pattern of each sensing reference signal port satisfies:

$$S = \left\{ n \cdot K_1 + N_{subc}^{PRB} \cdot K_0 + k_0 + m \mid n = 0, \cdots, N - 1 \right\};$$

wherein S represents a set of subcarrier positions occupied by the frequency-domain pattern of each sensing reference signal port;
N represents a number of subcarriers occupied by the frequency-domain pattern of each sensing reference signal

port;

$K_1$ represents a frequency-domain interval between subcarriers where sensing reference signals, adjacent in a frequency domain, of each sensing reference signal port are located;

$N_{subc}^{PRB}$ represents a number of subcarriers comprised in one physical resource block (PRB);

$K_0$ represents an index of a starting PRB of each sensing reference signal port relative to common resource block 0 (CRB0);

$k_0$ represents an index of a starting subcarrier of each sensing reference signal port within a PRB where the starting subcarrier is located; and

m represents a port index of each sensing reference signal port, and m is a non-negative integer less than $K_{min}$.

17. The method of claim 16, wherein receiving the parameter sent by the sensing transmitter comprises:

receiving a first parameter sent by the sensing transmitter, wherein the first parameter is used for determining the frequency-domain pattern of each sensing reference signal port;

the first parameter comprises at least one of:

a number of ports M;
a set of port indexes;
N;
$K_1$;
$K_0$; or
$k_0$.

18. The method of any one of claims 11 to 17, wherein receiving the parameter sent by the sensing transmitter comprises: receiving a second parameter sent by the sensing transmitter, wherein the second parameter is used for determining a time-domain pattern of each sensing reference signal port.

19. The method of claim 18, wherein the second parameter comprises at least one of:

an index of a starting slot of each sensing reference signal port;
a time-domain period of each sensing reference signal port;
a number of slots occupied by each sensing reference signal port;
a set of Orthogonal Frequency Division Multiplexing (OFDM) symbols within a slot for each sensing reference signal port;
an index of a starting OFDM symbol of each sensing reference signal port within a slot where the starting OFDM symbol is located;
a total number of OFDM symbols occupied by each sensing reference signal port; or
a symbol interval for each sensing reference signal port.

20. A sensing transmitter, comprising:

a processing module, configured to determine patterns of a plurality of sensing reference signal ports; and
a transceiver module, configured to send multi-port sensing reference signals based on the patterns of the plurality of sensing reference signal ports.

21. A sensing receiver, comprising:

a transceiver module, configured to receive a parameter sent by a sensing transmitter; and
a processing module, configured to determine patterns of a plurality of sensing reference signal ports based on the parameter;
wherein the transceiver module is further configured to receive multi-port sensing reference signals based on the patterns of the plurality of sensing reference signal ports; and
the processing module is further configured to perform measurements on the multi-port sensing reference signals.

22. A sensing transmitter, comprising:

one or more processors,

wherein the one or more processors are configured to perform the sensing method of any one of claims 1 to 10.

23. A sensing receiver, comprising:

one or more processors,
wherein the one or more processors are configured to perform the sensing method of any one of claims 11 to 19.

24. A sensing system, comprising:

a sensing transmitter, configured to perform the sensing method of any one of claims 1 to 10; and
a sensing receiver, configured to perform the sensing method of any one of claims **11** to 19.

25. A storage medium, having instructions stored thereon, wherein when the instructions are executed on a communication device, the communication device is caused to perform the sensing method of any one of claims 1 to 10 or to perform the sensing method of any one of claims 11 to 19.

sensing system 100

| sensing transmitter 101 | sensing receiver 102 |

**FIG. 1**

sensing transmitter

sensing receiver

S2101, determine patterns of sensing reference signal ports

S2102, parameter
(e.g., first parameter and second parameter)

S2103, determine patterns of sensing reference signal ports based on parameter sent by sensing transmitter

S2104, sensing transmitter send multi-part sensing reference signals based on patterns of sensing reference signal ports

S2105, perform measurement on received multi-port sensing reference signals

**FIG. 2**

**FIG. 3A**

**FIG. 3B**

**FIG. 3C**

determine patterns of sensing reference signal ports  ～S4101

↓

send a parameter to sensing receiver  ～S4102

↓

send multi-port sensing reference signals based on patterns of sensing reference signal ports  ～S4103

**FIG. 4A**

determine patterns of sensing reference signal ports  ～S4201

↓

send multi-port sensing reference signals based on patterns of sensing reference signal ports  ～S4202

↓

perform measurements on received multi-port sensing reference signals  ～S4203

**FIG. 4B**

receive a parameter sent by sensing transmitter  ～S5101

↓

determine patterns of sensing reference signal ports based on the parameter sent by sensing transmitter  ～S5102

↓

receive multi-port sensing reference signals based on patterns of sensing reference signal ports  ～S5103

↓

perform measurements on received mult-port sensing reference signals  ～S5104

**FIG. 5**

6100

transceiver module  6101

processing module  6102

**FIG. 6A**

EP 4 779 887 A1

6200

transceiver module — 6201

processing module — 6202

**FIG. 6B**

7100

7101 — processor     transceiver — 7103

7102 — memory

**FIG. 7A**

7200

7201 — processor     interface circuit — 7202

7203 — memory

**FIG. 7B**

# EP 4 779 887 A1

## INTERNATIONAL SEARCH REPORT

| International application No. |
| --- |
| **PCT/CN2023/118389** |

| A. | CLASSIFICATION OF SUBJECT MATTER |
| --- | --- |

H04B7/06(2006.01)i

According to International Patent Classification (IPC) or to both national classification and IPC

| B. | FIELDS SEARCHED |
| --- | --- |

Minimum documentation searched (classification system followed by classification symbols)

IPC:H04B H04W H04L

Documentation searched other than minimum documentation to the extent that such documents are included in the fields searched

Electronic data base consulted during the international search (name of data base and, where practicable, search terms used)

CNTXT; CNKI; ENTXT; DWPI; 3GPP; IEEE: 感知, 参考信号, 端口, 图案, 多, 频域, 子载波, 集合, sens+, reference singal, port, pattern, frequency domain, subcarrier, sub 1w carrier, set, class

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 114859333 A (RESEARCH INSTITUTE OF CHINA MOBILE COMMUNICATIONS CORP. et al.) 05 August 2022 (2022-08-05) description, paragraphs 60-184 | 1, 20, 22, 25 |
| Y | CN 116388941 A (LENOVO (BEIJING) CO., LTD.) 04 July 2023 (2023-07-04) description, paragraphs 101-110 | 1, 20, 22, 25 |
| A | CN 112887070 A (HUAWEI TECHNOLOGIES CO., LTD.) 01 June 2021 (2021-06-01) entire document | 1-25 |
| A | CN 115134844 A (HUAWEI TECHNOLOGIES CO., LTD.) 30 September 2022 (2022-09-30) entire document | 1-25 |
| A | CN 116233858 A (SPREADTRUM COMMUNICATIONS (SHANGHAI) CO., LTD.) 06 June 2023 (2023-06-06) entire document | 1-25 |
| A | KR 1020210093392 A (HONOR DEVICE CO., LTD.) 27 July 2021 (2021-07-27) entire document | 1-25 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **19 February 2024** | **23 February 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/118389** |

| Patent document cited in search report | | | Publication date (day/month/year) | Patent family member(s) | Publication date (day/month/year) |
| --- | --- | --- | --- | --- | --- |
| CN | 114859333 | A | 05 August 2022 | None | |
| CN | 116388941 | A | 04 July 2023 | None | |
| CN | 112887070 | A | 01 June 2021 | None | |
| CN | 115134844 | A | 30 September 2022 | None | |
| CN | 116233858 | A | 06 June 2023 | None | |
| KR | 1020210093392 | A | 27 July 2021 | None | |

Form PCT/ISA/210 (patent family annex) (July 2022)